# EUROPÄISCHE PATENTSCHRIFT

(11) **EP 1 947 438 B1**
(45) Veröffentlichungstag und Bekanntmachung des Hinweises auf die Patenterteilung: **28.12.2011**
(21) Anmeldenummer: 07100674.6
(22) Anmeldetag: 17.01.2007
(51) Int. Cl.: G01L 7/08, G01L 13/02

(54) **Differenzdruckmessgerät**
Differential pressure measuring device
Appareil de mesure d'une pression différentielle

(43) Veröffentlichungstag der Anmeldung: 23.07.2008
(73) Patentinhaber: WIKA Alexander Wiegand GmbH & Co.KG, 63911 Klingenberg/Main (DE)
(72) Erfinder: Kunz, Josef, 63931, Kirchzell (DE); Massong, Andreas, 63934, Röllbach (DE); Münch, Christian, 74722, Buchen-Hainstadt (DE)
(74) Vertreter: TBK

(56) Entgegenhaltungen:
- EP-A1- 0 633 458
- DE-U1- 8 130 130

## Beschreibung

Die Erfindung bezieht sich auf ein Differenzdruckmessgerät mit einer Messeinheit, einer Anzeigeeinheit und einem Übertragungsmechanismus.

Ein solches Differenzdruckmessgerät dient dazu, die Differenz zwischen zwei Drücken eines Messstoffes oder die Differenz zwischen dem Druck eines Messstoffes und dem Druck eines anderen Messstoffes zu messen und anzuzeigen. Diese gemessene und angezeigte Differenz von zwei Drücken wird in der Messtechnik üblicherweise und auch im Folgenden als Differenzdruck bezeichnet.

Differenzdruckmessgeräte werden beispielsweise benutzt zum Messen des Differenzdrucks zwischen dem Vorlauf und dem Rücklauf einer Heizungsanlage, zum Messen des Druckabfalls an einem Filter, einem Ventil oder einer Lochblende und zum Messen der Druckerhöhung durch eine Pumpe, einen Lüfter oder einen Verdichter.

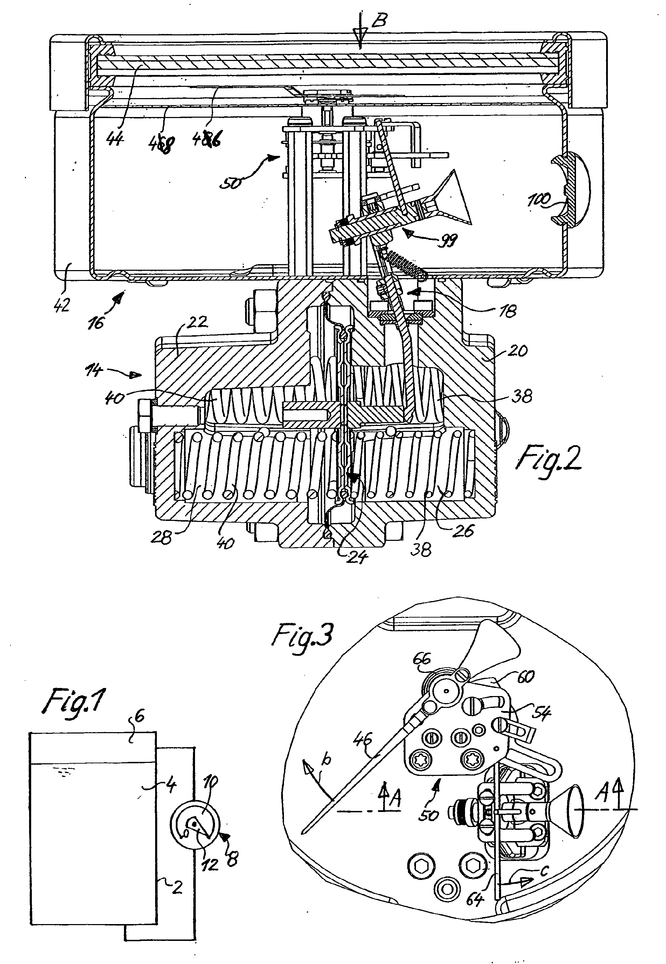

Ein weiterer bekannter Anwendungsfall für ein Differenzdruckmessgerät ist die Messung des Füllstandes in einem Flüssiggastank. Dieser Anwendungsfall wird im Folgenden näher erläutert. Figur 1 der beigefügten Zeichnungen zeigt schematisch einen Tank 2, in dem sich Flüssiggas 4, d.h. Gas in flüssiger Phase, befindet. Bei dem Gas kann es sich beispielsweise um Stickstoff, Sauerstoff oder Argon handeln. Oberhalb des Spiegels des Flüssiggases 4 liegt das Gas in gasförmiger Phase 6 vor. Der Tank 2 steht unter einem erhöhten Innendruck, wobei die gasförmiger Phase 6 beispielsweise einen Druck von 50 bar hat. Am Boden des Tanks 2 herrscht ein Druck, der gleich der Summe aus dem Druck der gasförmigen Phase 6 und dem hydrostatischen Druck des Flüssiggases 4 ist, wobei der hydrostatische Druck des Flüssiggases 4 proportional zur Höhe der Flüssiggassäule über dem Boden und somit zur Füllhöhe bzw. dem Füllstand des Flüssiggases ist. Mittels eines einerseits an dem Boden des Tanks 2 und andererseits an den Raum oberhalb des Flüssiggasspiegels angeschlossenen Differenzdruckmessgerätes 8 kann der Differenzdruck zwischen dem Druck der gasförmigen Phase 6 und dem Druck am Boden des Tanks 2 gemessen werden, wobei dieser Differenzdruck proportional zum hydrostatischen Druck der Flüssiggassäule ist und demzufolge ein direktes Maß für den Füllstand des Flüssiggases 4 ist.

Das Differenzdruckmessgerät 8 weist ein Zifferblatt 10 mit einer Skale auf, vor dem ein an einer drehbaren Zeigerwelle befestigter Zeiger 12 angeordnet ist, der über der Skale des Zifferblattes 10 eine dem Differenzdruck entsprechende Stellung einnimmt. Der Zeiger 12 ist von einer Nullpunktstellung aus, die dem Differenzdruck Null und dem Skalenwert "0" entspricht, drehbar in eine Endstellung, die dem Differenzdruck am oberen Ende des Differenzdruck-Messbereichs entspricht, für den das Differenzdruckmessgerät ausgelegt ist. Der Winkel, den der Zeiger für einen gegebenen Wert des Differenzdrucks bei seiner Drehbewegung von der Nullpunktstellung aus überstreicht, wird als Spanne bezeichnet. Die Spanne zwischen der Nullpunktstellung und der Endstellung beträgt üblicherweise 270°.

An einen Tank mit einem vorgegebenen maximalen Füllstand wird üblicherweise ein Differenzdruckmessgerät angeschlossen, dessen obere Grenze des Differenzdruck-Messbereichs im Wesentlichen gleich dem hydrostatischen Druck der Flüssiggassäule bei maximalem Füllstand ist. Dadurch wird erreicht, dass die verfügbare Spanne von 270° vollständig zur Anzeige des Differenzdrucks bzw. des Füllstandes genutzt werden kann.

Wenn der Tank zunächst für ein erstes Flüssiggas bestimmt war und der Differenzdruck-Messbereich des angeschlossenen Differenzdruckmessgerätes diesem ersten Flüssiggas angepasst war und derselbe Tank danach mit einem anderen, zweiten Flüssiggas befüllt wird, also beispielsweise mit Stickstoff statt mit Argon, ändern sich der hydrostatische Druck und somit der Differenzdruck bei einem gegebenen Füllstand, wenn die beiden Flüssiggase voneinander verschiedene Dichten haben. Wenn der Tank beispielsweise zuvor mit Flüssig-Argon mit einer Dichte von 1396 kg/m³ gefüllt war und danach mit Flüssig-Stickstoff mit einer Dichte von 808 kg/m³ befüllt wird, ist bei gleichem Füllstand der hydrostatische Druck des Flüssig-Stickstoffs um 42% kleiner als der des Flüssig-Argons. Dementsprechend wird für Flüssig-Stickstoff nicht die gesamte verfügbare Spanne von 270° des Differenzdruckmessgeräts zur Anzeige des Füllstandes zwischen dem Füllstand Null und dem maximalen Füllstand ausgenutzt. Dies ist für die Anzeige- und Ablesegenauigkeit nachteilig. Wenn der Füllstand auf der Skale in Längeneinheiten, Volumeneinheiten oder Prozenten angezeigt wird, ergibt sich für Flüssig-Stickstoff sogar eine falsche Anzeige, nämliche eine von 42% zu geringe Anzeige. Um diese Nachteile zu beheben, ist es bisher üblich, das Differenzdruckmessgerät auszutauschen gegen ein Differenzdruckmessgerät mit einem anderen Differenzdruck-Messbereich, der dem anderen, zweiten Flüssiggas angepasst ist. Alternativ ist es möglich, am vorhandenen Differenzdruckmessgerät die Spanne zu justieren, d.h. das Übersetzungsverhältnis des Zeigerwerks des Differenzdruckmessgeräts so zu verändern, dass die gesamte verfügbare Spanne von beispielsweise 270° bei dem hydrostatischen Druck des anderen, zweiten Flüssiggases bei maximalem Füllstand erreicht wird und dadurch der Differenzdruck-Messbereich des Differenzdruckmessgerätes geändert wird. Der Anzeigebereich in Längeneinheiten, beispielsweise der Anzeigebereich "0 ... 8m" Füllstand, Volumeneinheiten oder Prozenten bleibt dabei unverändert. Eine solche Änderung der Spanne ist jedoch von einer sogenannten Nullpunktverstellung begleitet, was bedeutet, dass der Zeiger in seiner dem Differenzdruck Null zugeordneten Nullpunktstellung nicht mehr auf den Skalenwert "0" weist. Dies wiederum macht eine iterative Justierung von Spanne und Nullpunkt notwendig, die aufwendig ist und am Einbauort des Differenzdruckmessgerätes normalerweise nicht durchgeführt werden kann.

Die gleichen Schwierigkeiten, wie sie vorstehend im Zusammenhang mit der Verwendung eines Differenzdruckmessgerätes zum Zweck der Füllstandsmessung beschrieben sind, können auch bei anderen Anwendungsfällen eines Differenzdruckmessgerätes auftreten. Sie können beispielsweise dann auftreten, wenn das Differenzdruckmessgerät den Differenzdruck an einem Filter misst und als Beladungsgrad anzeigt und wenn ein vorhandener Filtereinsatz, für den das Differenzdruckmessgerät ausgelegt ist, gegen einen Filtereinsatz ausgetauscht wird, der eine andere Durchlässigkeit als die des auszutauschenden Filtereinsatzes hat.

Ein Differenzdruckmessgerät mit den Merkmalen des Oberbegriffs von Patentanspruch 1 ist durch die Druckschrift DE-U-8130130 bekannt. Bei diesem bekannten Differenzdruckmessgerät weist der Träger des Übertragungsmechanismus eine im Gehäuse der Messeinheit drehbar gelagerte Messwelle auf. Die Stellvorrichtung des bekannten Differenzdruckmessgerätes umfasst eine Spindel und einen Lagerblock, mit dem die Spindel in Eingriff steht und an dem das als Stift ausgebildete Ausgangselement des Übertragungsmechanismus befestigt ist. Mittels dieser Stellvorrichtung ist das Ausgangselement stufenlos in Richtung der Achse der Messwelle verschiebbar. Durch diese Stellbewegung kann der Abstand der Kontaktstelle zwischen dem Ausgangselement des Übertragungsmechanismus und dem ebenfalls als Stift ausgebildeten Eingangselement des Zeigerwerks von der Schwenkachse des Eingangselementes verändert werden. Durch eine Änderung dieses Abstandes ist die Spanne veränderbar und einstellbar. Dabei ist bei dem bekannten Differenzdruckmessgerät vorgesehen, dass die Spindel der Stellvorrichtung durch eine Öffnung im Anzeigegehäuse hindurch zugänglich ist, so dass die Stellbewegung und demzufolge das Einstellen der Spanne am fertigen Differenzdruckmessgerät ausgeführt werden kann. Zusätzlich weist das bekannte Differenzdruckmessgerät eine Nullpunktverstelleinrichtung auf. Diese ermöglicht es, eine bei einer Veränderung der Spanne auftretende Nullpunktverstellung zu korrigieren. Es ist somit auch bei diesem bekannten Differenzdruckmessgerät notwendig, Spanne und Nullpunkt in aufwendiger Weise iterativ zu justieren.

Der Erfindung liegt die Aufgabe zugrunde, ein Differenzdruckmessgerät zu schaffen, dessen Differenzdruck-Messbereich auf einfache Weise einer Änderung des maximal zu messenden Differenzdrucks angepasst werden kann, und zwar möglichst am Montageort des Differenzdruckmessgerätes.

Erfindungsgemäß wird diese Aufgabe gelöst durch das Differenzdruckmessgerät gemäß Patentanspruch 1. Bei dem erfindungsgemäßen Differenzdruckmessgerät ist vorgesehen, dass das Eingangselement der Anzeigeeinheit und das Ausgangselement des Übertragungsmechanismus relativ zueinander derart angeordnet sind, dass bei der Nullstellung des mittleren Abschnitts des Trennelementes die erste Kontaktlinie parallel zu derjenigen Ebene verläuft, in der sich die zweite Kontaktlinie bei der Stellbewegung des Ausgangselementes relativ zu dem Träger bewegt. Dadurch wird erreicht, dass während der Stellbewegung des Ausgangselementes der Abstand der Kontaktstelle von der Schwenkachse des Eingangselementes in gewünschter Weise verändert werden kann, ohne dass zugleich diejenige Stellung des Eingangselementes des Zeigerwerks verändert wird, die das Eingangselement bei der Nullstellung des mittleren Abschnitts des Trennelementes einnimmt. Dementsprechend ändert sich die Nullpunktstellung des Zeigers bei einer Änderung der Spanne nicht, so dass eine Nullpunktverstellung nicht auftritt und es nicht erforderlich ist, iterativ den Nullpunkt zu justieren. Dadurch ist es wesentlich vereinfacht, die Spanne des Differenzdruckmessgerätes auf einfache Weise einer Änderung des maximal zu messenden Differenzdrucks anzupassen und dadurch den Messbereich des Differenzdruckmessgerätes zu verändern.

Vorteilhafte Ausgestaltungen der Erfindung sind in den abhängigen Ansprüchen definiert.

Ein Ausführungsbeispiel der Erfindung ist in den Zeichnungen dargestellt und wird im Folgenden näher erläutert. Es zeigen:
Figur 1 eine schematische Darstellung eines Tanks mit einem daran angeschlossenen Differenzdruckmessgerät zur Messung des Füllstandes in dem Tank;
Figur 2 ein Ausführungsbeispiel eines erfindungsgemäßen Differenzdruckmessgerätes in einer Schnittdarstellung gemäß A-A in Figur 3;
Figur 3 eine ausschnittsweise Draufsicht auf das Differenzdruckmessgerät gemäß Figur 2 in Richtung eines Pfeiles B in Figur 2, wobei eine Sichtscheibe und ein Zifferblatt nicht dargestellt sind;
Figur 4 einen vergrößerten Ausschnitt zu Figur 2;
Figur 5 ausschnittsweise eine Lageranordnung eines Trägers des Differenzdruckmessgerätes in einer zu Figur 4 senkrechten Zeichnungsebene;
Figur 6 eine perspektivische Darstellung eines Zeigerwerks und eines Übertragungsmechanismus des Differenzdruckmessgerätes;
Figur 7 eine perspektivische Darstellung von Elementen des Übertragungsmechanismus, teilweise im Schnitt;
Figuren 8 bis 10 schematische Darstellungen zur Erläuterung der Funktionsweise des Differenzdruckmessgerätes, wobei Figur 8 eine Vorderansicht zeigt, Figur 9 eine Draufsicht zu Figur 8 zeigt und Figur 10 eine Seitenansicht zu Figur 8 zeigt; und
Figur 11 eine Anordnung aus einem Permanentmagneten und einem Drehwinkel-Halleffektsensor.

Das in den Figuren 2 bis 7 dargestellte Ausführungsbeispiel eines erfindungsgemäßen Differenzdruckmessgerätes umfasst eine Messeinheit 14, eine Anzeigeeinheit 16 und einen Übertragungsmechanismus 18.

Die Messeinheit 14 umfasst ein Gehäuse, das durch ein erstes Gehäuseteil 20 und ein zweites Gehäuseteil 22 gebildet ist, die fluiddicht miteinander verbunden sind. Im Inneren des Gehäuses ist eine Kammer ausgebildet, die durch ein Trennelement in Form einer scheibenförmigen Membran 24 in einen ersten Druckraum 26 und einen zweiten Druckraum 28 unterteilt ist.

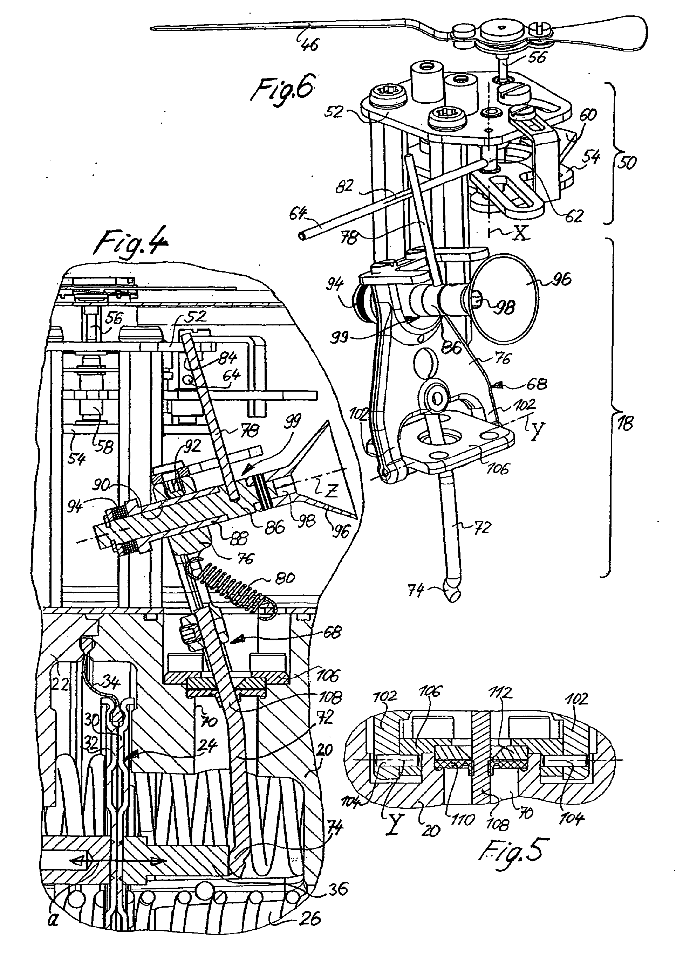

Die Membran 24 besteht aus zwei aneinander anliegenden, steifen Platten 30 und 32 und einer ringförmigen Membranfolie 34 aus beispielsweise Kunststoffmaterial oder Gummi. Die ringförmige Membranfolie 34 ist an ihrem radial inneren Rand zwischen den beiden Platten 30 und 32 eingespannt und an ihrem radial äußeren Rand zwischen den beiden Gehäuseteilen 20 und 22 fluiddicht eingespannt. Die ringförmige Membranfolie 34 bildet einen Randabschnitt der Membran 24, und die beiden Platten 30 und 32 bilden einen mittleren Abschnitt der Membran 24. Die ringförmige Membranfolie 34 ist derart ausgebildet, dass sie eine Hubbewegung des mittleren Abschnitts der Membran 24 im Wesentlichen senkrecht zur Ebene des mittleren Abschnitts zulässt und dieser Hubbewegung praktisch keinen Widerstand entgegensetzt. Eine solche Membran, die ihrer Auslenkung bzw. Hubbewegung praktisch keinen Widerstand entgegensetzt, wird auch als Schlaffmembran bezeichnet. Die Hubbewegung des mittleren Abschnitts der Membran 24 erfolgt in einer Richtung a, die in Figur 4 durch einen Doppelpfeil gezeigt ist. Zur Begrenzung der Hubbewegung der Membran 24 in Richtung zum ersten Druckraum 26 und in Richtung zum zweiten Druckraum 28 sind jeweils am ersten Gehäuseteil 20 und am zweiten Gehäuseteil 22 Anlagebetten ausgebildet. Am mittleren Abschnitt der Membran 24 ist mittig ein Bolzen 36 befestigt, der sich im Wesentlichen senkrecht zur Ebene des mittleren Abschnitts der Membran 24 erstreckt.

Abweichend vom dargestellten Ausführungsbeispiel kann das Trennelement durch einen in der Kammer des Gehäuses der Messeinheit 14 abgedichtet verschiebbaren Kolben gebildet sein.

In dem ersten Gehäuseteil 20 ist ein nicht dargestellter erster Messstoffanschluss zur Einleitung von Messstoff in den ersten Druckraum 26 ausgebildet. In dem zweiten Gehäuseteil 22 ist ein nicht dargestellter zweiter Messstoffanschluss zur Einleitung von Messstoff in den zweiten Druckraum 28 ausgebildet. Das Differenzdruckmessgerät dient dazu, den Differenzdruck zwischen dem Druck des Messstoffs in dem ersten Druckraum 26 und dem Druck des Messstoffs in dem zweiten Druckraum 28 zu messen und anzuzeigen. Bei dem dargestellten Ausführungsbeispiel ist vorgesehen, dass der Messstoff mit dem höheren der beiden Drücke in den ersten Druckraum 26 eingeleitet wird.

In dem ersten Druckraum 26 sind drei erste Federn 38 angeordnet, von denen in den Figuren 2 und 4 lediglich zwei sichtbar sind. Die als Schrauben-Druckfedern ausgebildeten ersten Federn 38 stützen sich einerseits am ersten Gehäuseteil 20 und andererseits an der Membran 24 ab. In dem zweiten Druckraum 28 sind drei zweite Federn 40 angeordnet, von denen in den Figuren 2 und 4 lediglich zwei sichtbar sind. Die als Schrauben-Druckfedern ausgebildeten zweiten Federn 40 stützen sich einerseits am zweiten Gehäuseteil 22 und andererseits an der Membran 24 ab. Die Federkräfte der ersten Federn 38 und der zweiten Federn 40 wirken in zueinander entgegengesetzten Richtungen auf die Membran 24. Wenn im ersten Druckraum 26 und im zweiten Druckraum 28 gleiche Drücke herrschen, d.h. wenn der Differenzdruck gleich Null ist, nimmt die Membran 24 in der Kammer des Gehäuses ihre Nullstellung ein, die ausschließlich durch das Kräftegleichgewicht der Federkräfte der ersten Federn 38 und der zweiten Federn 40 bestimmt ist. In den Figuren 2 und 4 ist die Membran 24 in dieser Nullstellung dargestellt. Wenn ausgehend vom Gleichdruckzustand in den beiden Druckräumen 26 und 28 der Druck im ersten Druckraum 26 größer wird als im zweiten Druckraum 28, wird die Membran 24 aus ihrer Nullstellung heraus in Richtung zum zweiten Druckraum 28 verlagert, bis sie eine neue Gleichgewichtsstellung erreicht, in der die Federkräfte der ersten Federn 38 und der zweiten Federn 40 sowie die resultierende Druckkraft aufgrund der Drücke im ersten Druckraum 26 und im zweiten Druckraum 28 im Gleichgewicht sind. Die Strecke, um die der mittlere Abschnitt der Membran 24 aus der Nullstellung heraus bis in die neue Gleichgewichtsstellung verlagert wird, wird hier als Hub bezeichnet, und ist proportional zum Differenzdruck.

Die Anzeigeeinheit 16 umfasst ein Anzeigegehäuse 42, eine Sichtscheibe 44, einen Zeiger 46, ein Zifferblatt 48 und ein Zeigerwerk 50. Das Anzeigegehäuse 42 ist topfförmig ausgebildet und am Gehäuse der Messeinheit 14 befestigt. Abweichend vom dargestellten Ausführungsbeispiel kann das Anzeigegehäuse auch einstückig mit dem Gehäuse der Messeinheit bzw. einem der Gehäuseteile desselben ausgebildet sein.

Das Anzeigegehäuse 42 trägt auf seiner in Figur 2 oben angeordneten Frontseite die Sichtscheibe 44 und mit Abstand dazu das Zifferblatt 48, auf dem sich eine nicht dargestellte Skale befindet. In dem Zwischenraum zwischen der Sichtscheibe 44 und dem Zifferblatt 48 ist der vor der Skale des Zifferblattes 48 bewegbare Zeiger 46 angeordnet.

Im Inneren des Anzeigegehäuses 42 ist das Zeigerwerk 50 angeordnet, das mit Abstand voneinander angeordnete Platinen 52 und 54 (siehe Figuren 4 und 6) aufweist, in denen drehbar eine Zeigerwelle 56 gelagert ist, auf der ein Zahnritzel 58 sitzt. Ein Zahnsegment 60 kämmt mit dem Zahnritzel 58 und ist an einer Segmentwelle 62 befestigt, die drehbar in den Platinen 52 und 54 gelagert ist. Die Achse X (siehe Figur 6) der Segmentwelle 62 verläuft parallel zur Achse der Zeigerwelle 56.

Das Zeigerwerk 50 weist ferner ein Eingangselement auf, das beim dargestellten Ausführungsbeispiel als gerader Stift 64 mit kreiszylindrischer Form ausgebildet ist. Der Stift 64 ist an der Segmentwelle 62 befestigt, und seine Achse verläuft im Wesentlichen senkrecht zur Achse X der Segmentwelle 62, so dass der Stift 64 um die Achse X der Segmentwelle 62 als Schwenkachse des Eingangselementes bzw. des Stiftes 64 im Zeigerwerk 50 geschwenkt werden kann. Die Schwenkbewegung des Stiftes 64 wird mittels des Zahnsegmentes 60 und des Zahnritzels 58 zur Zeigerwelle 56 übertragen, wobei das Zeigerwerk die Schwenkbewegung des Stiftes 64 in eine Drehbewegung der Zeigerwelle 56 und schließlich des Zeigers 46 umwandelt, der an der Zeigerwelle 56 befestigt ist. Eine Spiralfeder 66 (siehe Figur 3) greift an der Zeigerwelle 56 an und bewirkt eine Vorspannung, die den Zeiger 46 in Richtung eines Pfeils b (siehe Figur 3) aus seiner Nullpunktstellung auszulenken versucht und zugleich den Stift 64 in Richtung eines Pfeils c (siehe Figur 3) zu schwenken versucht.

Abweichend vom dargestellten Ausführungsbeispiel kann das Eingangselement des Zeigerwerks 50 durch einen einstückig mit dem übrigen Zahnsegment 60 ausgebildeten Arm desselben oder durch einen Stift mit einer nicht-kreiszylindrischen Form gebildet sein, der eine gerade Kante aufweist, die eine erste Kontaktlinie bildet, deren Bedeutung weiter unten erläutert wird.

Der Übertragungsmechanismus 14 dient dazu, die Hubbewegung des mittleren Abschnitts der Membran 24 zum Eingangselement bzw. Stift 64 des Zeigerwerks 50 zu übertragen, so dass der Stift 64 entsprechend dem Hub des mittleren Abschnitts der Membran 24 geschwenkt wird und schließlich der Zeiger 46 aus seiner Nullpunktstellung heraus ausgelenkt wird in eine dem Hub des mittleren Abschnitts der Membran 24 und somit dem Differenzdruck entsprechende Stellung.

Der Übertragungsmechanismus 18 umfasst einen Träger, der beim dargestellten Ausführungsbeispiel als zweiarmiger Hebel 68 ausgebildet ist. Der Hebel 68 ist um eine Lagerachse Y schwenkbar am Gehäuse der Messeinheit 14 gelagert, wobei die Lagerachse Y und die Richtung a der Hubbewegung des mittleren Abschnitts der Membran 24 windschief und im Wesentlichen senkrecht zueinander angeordnet sind. Der Hebel 68 erstreckt sich von dem ersten Druckraum 26 bis in das Innere des Anzeigegehäuses 42 und verläuft abgedichtet durch eine im ersten Gehäuseteil 20 ausgebildete Öffnung 70. Ein bei dem dargestellten Ausführungsbeispiel als im Wesentlichen kreiszylindrischer Stab ausgebildeter erster Arm 72 des Hebels 68 ragt in den ersten Druckraum 26 und weist einen gekrümmten Endabschnitt 74 auf, der an der freien Stirnfläche des Bolzens 36 anliegt.

Der zweite Arm 76 des Hebels 68 erstreckt sich in das Innere des Anzeigegehäuses 42 und trägt ein Ausgangselement, das als gerader Stift 78 mit kreiszylindrischer Form ausgebildet ist. Abweichend vom dargestellten Ausführungsbeispiel kann das Ausgangselement durch einen Stift mit nicht-kreiszylindrischer Form gebildet sein, der eine gerade Kante aufweist, die eine zweite Kontaktlinie bildet, deren Bedeutung weiter unten erläutert wird. Der Stift 78 liegt an dem Stift 64 an, der das Eingangselement des Zeigerwerks 50 bildet. Die beiden Stifte 64 und 78 berühren sich an einer Kontaktstelle. Die Spiralfeder 66 des Zeigerwerks 50 sorgt durch die von ihr ausgeübte Vorspannung dafür, dass der Kontakt zwischen den beiden Stiften 64 und 78 stets aufrechtgehalten wird. Eine am zweiten Arm 76 des Hebels 66 angreifende Feder 80 übt auf den Hebel 68 eine solche Vorspannung aus, dass der Endabschnitt 74 stets in Anlage am Bolzen 36 gehalten wird. Die Feder 80 ist jedoch nicht zwingend notwendig, da die Spiralfeder 66 gleichsinnig wie die Feder 80 wirkt. Die Spiralfeder 66 und gegebenenfalls die Feder 80 sind derart dimensioniert, dass die von ihnen auf den mittleren Abschnitt der Membran 24 ausgeübte Kraft vernachlässigbar ist im Vergleich zu den Federkräften der ersten Federn 38 und der zweiten Federn 40.

Aufgrund der vorstehend beschriebenen Ausbildung des Übertragungsmechanismus 18 führt dessen durch den Hebel 68 gebildeter Träger eine Schwenkbewegung um die Lagerachse Y im Uhrzeigersinn in Figur 4 aus, wenn der mittlere Abschnitt der Membran 24 eine Hubbewegung in Richtung a nach links in Figur 4 ausführt, wobei das Ausmaß der Schwenkbewegung dem Hub des mittleren Abschnitts der Membran 24 entspricht. An dieser Schwenkbewegung nimmt der Stift 78 teil. Der Stift 64 folgt der Schwenkbewegung des Stiftes 78, so dass der Stift 64 ebenfalls eine Schwenkbewegung ausführt, und zwar um die Achse X der Segmentwelle 54. Während dieser gleichzeitigen Schwenkbewegungen des Stiftes 64 und des Stiftes 78 wandert die Kontaktstelle zwischen den beiden Stiften entlang einer geraden, ersten Kontaktlinie 82 am Stift 64 (siehe Figur 6), die durch eine Mantellinie des zylindrisch geformten Stiftes 64 gebildet ist. Zugleich wandert dabei die Kontaktstelle entlang einer geraden, zweiten Kontaktlinie 84 am Stift 78, die durch eine Mantellinie des zylindrisch geformten Stiftes 78 gebildet ist. Diese Mantellinie 84 fällt zusammen mit der in Figur 4 gezeigten linken Begrenzungslinie des Stiftes 78. Das Übersetzungsverhältnis zwischen dem Hub des mittleren Abschnitts der Membran 24 und dem Ausschlag des Zeigers 46 und die Spanne sind umgekehrt proportional zum (mittleren) Abstand der Kontaktstelle zwischen den beiden Stiften 64 und 78 von der durch die Achse X der Segmentwelle 62 gebildeten Schwenkachse des Stiftes 64.

Wenn das Eingangselement des Zeigerwerks 50 und/oder das Ausgangselement des Übertragungsmechanismus 18 eine gerade Kante aufweisen, bildet diese gerade Kante die erste bzw. zweite Kontaktlinie. Die Lagerachse Y des Hebels 68 verläuft im Wesentlichen parallel zu der ersten Kontaktlinie 82, und vorzugsweise parallel zu der Kontaktlinie 82 bei derjenigen Schwenkstellung des Stiftes 64, die dieser bei der Nullstellung des mittleren Abschnitts der Membran 24 einnimmt.

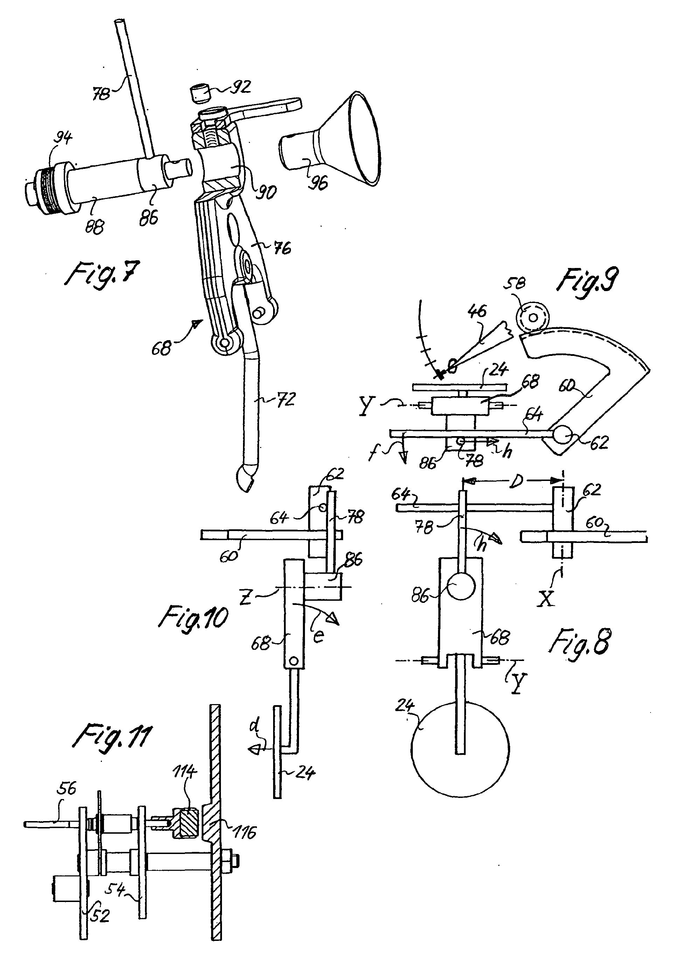

Der das Ausgangselement des Übertragungsmechanismus 18 bildende Stift 78 ist am zweiten Arm 76 des Hebels 68 mittels einer Stellwelle 86 befestigt. Die Stellwelle 86 ist in einer Lagerhülse 88 gelagert, die in einer im zweiten Arm 76 ausgebildeten Bohrung 90 sitzt. Die Stellwelle 86 ist um ihre Achse Z in der Lagerhülse 88 drehbar, jedoch relativ zur Lagerhülse 88 nicht axial verschiebbar. Die Lagerhülse 88 wiederum ist in der Bohrung 90 in Richtung der Achse Z der Stellwelle 86 verschiebbar und in einer wählbaren, durch Verschieben der Lagerhülse 88 erreichten Stellung am zweiten Arm 76 fixierbar. Zum Fixieren der Lagerhülse 88 in gewählter Axialstellung dient eine Schraube 92 (siehe Figuren 4 und 7), die in den zweiten Arm 76 derart geschraubt ist, dass sie die Lagerhülse 88 in der gewünschten Stellung in der Bohrung 90 festklemmt .

Zwischen der Stellwelle 86 und der Lagerhülse 88 wirkt eine beispielsweise durch eine Schrauben-Druckfeder oder ein Tellerfederpaket gebildete Einrichtung 94, die für ausreichende Haftreibung zwischen der Stellwelle 86 und der Lagerhülse 88 sorgt, so dass die Stellwelle 86 in der Lagerhülse 88 zwar gedreht werden kann, jedoch gegen unerwünschte Drehung gesichert ist.

Die Stellwelle 86 ist an ihrem einen Ende mit einem Kopf versehen, der durch einen an der Stellwelle 86 befestigten Trichter 96 gebildet ist. An dem der Lagerhülse 88 zugewandten, engen Ende des Trichters 96 ist ein Innensechskant 96 ausgebildet, der es ermöglicht, an der Stellwelle 86 ein Drehwerkzeug anzusetzen, um die Stellwelle 86 um ihre Achse Z zu drehen. Das Ansetzen des Drehwerkzeugs wird durch den Trichter 96 erleichtert, der in Richtung zu seinem von der Lagerhülse 88 abgewandten Ende weiter wird. In Verlängerung der Achse Z der Stellwelle 86 ist im Anzeigegehäuse 42 eine mittels eines Stopfens 100 normalerweise verschlossene Öffnung ausgebildet, so dass nach Entfernung des Stopfens 100 das Drehwerkzeug von außen in das Anzeigegehäuse 42 eingeführt und in Eingriff mit dem Innensechskant 98 gebracht werden kann, um die Stellwelle 86 entgegen dem durch die Einrichtung 94 ausgeübten Widerstand zu drehen.

Der das Ausgangselement des Übertragungsmechanismus 18 bildende Stift 78 ist an der Stellwelle 86 derart befestigt, dass zumindest die zweite Kontaktlinie 84 am Stift 78 senkrecht zur Achse der Stellwelle Z verläuft. Die Achse Z der Stellwelle 86 verläuft vorzugsweise senkrecht zur Lagerachse Y des Hebels 68, wobei jedoch Abweichungen von der genau zueinander senkrechten Ausrichtung nicht ausgeschlossen sind.

Die am Hebel 68 um die Achse Z drehbare Stellwelle 86 einschließlich ihres durch den Trichter 96 gebildeten Kopfes und die der Stellwelle 86 zugeordnete Lagerhülse 88 sowie Einrichtung 94 bilden eine Stellvorrichtung 99, mittels der der Abstand der Kontaktstelle zwischen den beiden Stiften 64 und 78 von der Achse X der Segmentwelle 62 einstellbar ist, so dass dadurch das Übersetzungsverhältnis zwischen dem Hub des mittleren Abschnitts der Membran 24 und dem Ausschlag des Zeigers 46 und dementsprechend die Spanne einstellbar und veränderbar sind. Wenn die Stellwelle 86 relativ zum Hebel 66 gedreht wird, während die Stellung des Hebels 68 unverändert bleibt, führt der Stift 78 eine Stellbewegung im Sinne einer Schwenkung um die Achse Z der Stellwelle 86 aus. Aufgrund dieser Stellbewegung ändert sich der Abstand der Kontaktstelle von der Schwenkachse X der Segmentwelle 62. Da zumindest die zweite Kontaktlinie 84 senkrecht zur Achse Z der Stellwelle 86 ausgerichtet ist, beschreibt die zweite Kontaktlinie 84 bei der Stellbewegung eine Ebene, die im Folgenden als Stellebene bezeichnet wird und in Figur 4 senkrecht zu deren Zeichnungsebene verläuft. Wesentlich für die Erfindung ist, dass der Stift 64 und der Stift 78 dann, wenn der mittlere Abschnitt der Membran 24 seine Nullstellung einnimmt, d.h. wenn der Differenzdruck gleich Null ist, relativ zueinander derart angeordnet sind, dass die erste Kontaktlinie 82 parallel zu der Stellebene verläuft. Dadurch wird erreicht, dass die Stellung, die der das Eingangselement des Zeigerwerks 50 bildende Stift 64 bei Nullstellung des mittleren Abschnitts der Membran 24 einnimmt, durch die Stellbewegung des das Ausgangselement des Übertragungsmechanismus 18 bildenden Stiftes 78 nicht verändert wird. Dies heißt mit anderen Worten, dass die Nullpunktstellung des Zeigers 64 unverändert bleibt bei der Stellbewegung des Stiftes 78 und der durch diese Stellbewegung erfolgenden Einstellung des Übersetzungsverhältnisses.

Das erfindungsgemäße Differenzdruckmessgerät ist vorzugsweise derart ausgebildet, dass die Stellebene parallel zu sich selbst verschoben werden kann. Zu diesem Zweck ist bei dem beschriebenen Ausführungsbeispiel vorgesehen, dass die Stellvorrichtung 99 am zweiten Arm 76 des Hebels 66 in Richtung der Achse Z der Stellwelle 86 verschiebbar angeordnet ist. Wenn sich bei der Montage des Differenzdruckmessgerätes ergibt, dass die erste Kontaktlinie 82 bei der Nullstellung des mittleren Abschnitts der Membran 24 nicht parallel zu der Stellebene verläuft, wird die Lagerhülse 88 in Richtung der Achse Z der Stellwelle 86 verschoben. Durch diese Verschiebung wird der Stift 78 parallel zu sich selbst verschoben und werden auch die von der zweiten Kontaktfläche 84 bei der Stellbewegung überstrichene Stellebene sowie die Kontaktstelle zwischen den beiden Stiften 64 und 78 in Richtung der Achse Z verschoben. Der Stift 64 folgt dieser Verschiebung. Dabei ändert sich der Winkel, den die erste Kontaktlinie 82 mit der Stellebene einschließt. Wenn durch Verschieben der Lagerhülse 88 eine Axialstellung der Stellwelle 86 erreicht ist, in der die erste Kontaktlinie 82 und die Stellebene parallel zueinander verlaufen, wird die Lagerhülse 88 in dieser Stellung mittels der Schraube 92 fixiert. Danach wird dann der Zeiger 46 an der Zeigerwelle 56 so angebracht bzw. eingestellt, dass er seine Nullpunktstellung einnimmt, in der er auf den Skalenwert "0" weist.

Im Folgenden wird unter Bezugnahme auf die schematischen Darstellungen in den Figuren 8 bis 10 die Funktionsweise des vorstehend beschriebenen Differenzdruckmessgerätes zusammenfassend erläutert. In den Figuren 8 bis 10 sind die Elemente des Differenzdruckmessgerätes in ihren Stellungen dargestellt, die sie bei der Nullstellung des mittleren Abschnitts der Membran 24, d.h. bei dem Differenzdruck Null einnehmen. Ein Differenzdruck größer als Null verursacht einen Hub des mittleren Abschnitts der Membran 24 in Richtung eines Pfeils d in Figur 10. Entsprechend diesem Hub wird der Hebel 68 um seine Lagerachse Y in Richtung eines Pfeils e geschwenkt. An der Schwenkbewegung des Hebels 68 nimmt der Stift 78 teil. Der Stift 64 folgt der Schwenkbewegung des Stiftes 78 und führt seinerseits eine Schwenkbewegung in Richtung eines Pfeils f um die Achse X der Segmentwelle 62 aus, so dass das Zahnsegment 60 geschwenkt wird und über das Zahnritzel 58 den Zeiger 46 aus seiner Nullpunktstellung auslenkt. Das Übersetzungsverhältnis zwischen dem Hub des mittleren Abschnitts der Membran 24 und dem Ausschlag bzw. der Auslenkung des Zeigers 46 ist umgekehrt proportional zu dem (mittleren) Abstand D zwischen der Achse X der Segmentwelle 62 und der Kontaktstelle zwischen den beiden Stiften 64 und 78. Es sei angenommen, dass das Übersetzungsverhältnis derart ist, dass der Zeiger sich aus seiner Nullpunktstellung über die gesamte verfügbare Spanne von beispielsweise 270° bewegt für einen Differenzdruck-Messbereich bis zu einem vorgegebenen maximal zu messenden Differenzdruck.

Wenn der maximal auftretende und zu messende Differenzdruck sich ändert und beispielsweise geringer wird, wie dies bei dem einleitend beschriebenen Wechsel zu einem Flüssiggas mit geringerer Dichte der Fall ist, erreicht der Zeiger 46 seine dem geänderten maximalen Differenzdruck entsprechende Endstellung nach einer Spanne, die kleiner als die verfügbare Spanne von beispielsweise 270° ist. Es ist daher beispielsweise im Fall der Füllstandanzeige in Längen- oder Volumeneinheiten oder in Prozenten notwendig, den Differenzdruck-Messbereich zu ändern und dem verringerten maximal auftretenden und zu messenden Differenzdruck anzupassen. Dies erfolgt durch Vergrößerung der Spanne, indem das Übersetzungsverhältnis durch Verringerung des Abstandes D geändert wird. Zu diesem Zweck wird der Stift 78 um die Achse Z der Stellwelle 86 in Richtung eines Pfeils h gedreht (siehe Figuren 8 und 9). Diese Dreh- und Stellbewegung des Stiftes 78 erfolgt in einer Stellebene, zu der der Stift 64 - genauer gesagt dessen erste Kontaktlinie - bei der Nullstellung des mittleren Abschnitts der Membran 24 parallel verläuft, so dass bei dieser Stellbewegung der Stift 64 und der Segmenthebel 60 und demzufolge der Zeiger 46 nicht bewegt werden und die Nullpunktstellung des Zeigers 46 erhalten bleibt. Um diese gewünschte Parallelität zu gewährleisten und einstellen zu können, ist der Stift 78 in Richtung der Achse Z der Stellwelle 86 parallel zu sich selbst am Hebel 68 verschiebbar. Erst nach der Einstellung der gewünschten Parallelität wird der Zeiger 46 bei Nullstellung des mittleren Abschnitts der Membran 24 so an der Zeigerwelle befestigt oder eingestellt, dass er seine Nullpunktstellung einnimmt.

Das erfindungsgemäße Differenzdruckmessgerät ermöglicht eine vergleichsweise große Veränderung des Differenzdruck-Messbereichs. Das Verhältnis des kleinsten einstellbaren Differenzdruck-Messbereichs zum größten einstellbaren Differenzdruck-Messbereich liegt im Bereich von 2 bis 5 und ist vorzugsweise 3,5.

Im Folgenden werden eine Lageranordnung zur schwenkbaren Lagerung des Hebels 68 und eine Dichtungsanordnung unter Bezugnahme auf Figur 5 näher erläutert. Der zweite Arm 76 des Hebels 68 weist bei dem dargestellten Ausführungsbeispiel einen gabelförmig gestalteten Abschnitt auf, an dem zwei zueinander parallele Schenkel 102 angeformt sind, die zwischen sich eine Ausnehmung begrenzen. Jeder der beiden Schenkel 102 trägt einen Lagerstift 104, wobei die beiden Lagerstifte 104 koaxial zueinander auf der Lagerachse Y angeordnet sind. Zwischen den beiden Schenkeln 102 ist eine Lagerplatte 106 angeordnet, in der die beiden Lagerstifte 104 fixiert sind. Die Lagerplatte 106 ist mit Hilfe von Schrauben am ersten Gehäuseteil 20 befestigt, so dass der Hebel 68 mittels der vorstehend beschriebenen Lageranordnung um die Lagerachse Y schwenkbar am ersten Gehäuseteil 20 angeordnet ist.

Der erste Arm 72 geht über in einen einstückig mit ihm ausgebildeten Stababschnitt 108, der ebenso wie der erste Arm eine kreiszylindrische Form hat und durch die Ausnehmung zwischen den beiden Schenkeln 102 verläuft. Der Stababschnitt 108 ist an dem gabelförmigen Abschnitt des zweiten Armes 76 befestigt.

Eine ringförmige Dichtmanschette 110 aus einem elastomeren Material ist mit ihrem inneren Rand an der Oberfläche des Stababschnitts 108 befestigt. Der äußere Rand der Dichtmanschette 110 liegt auf einer Schulter auf, die die Öffnung 70 im ersten Gehäuseteil 20 umgibt. Auf ihrer vom ersten Druckraum 26 abgewandten Seite wird die Dichtmanschette 110 von einer Stützplatte 112 abgestützt. Die Stützplatte 112 und der äußere Rand der Dichtmanschette 110 sind zwischen der Lagerplatte 106 und der die Öffnung 70 umgebenden Schulter eingespannt. Die Dichtmanschette 110 und ihre Stützplatte 112 bilden eine Dichtungsanordnung, die den Austritt von Messstoff aus dem ersten Druckraum 26 durch die Öffnung 70 verhindert. Die Lagerachse Y verläuft durch denjenigen Bereich des Stababschnitts 108, an dessen Oberfläche der innere Rand der Dichtmanschette 110 befestigt ist, so dass die bei einer Schwenkbewegung des Hebels 68 erfolgende Deformation der elastischen Dichtmanschette 110 auf ein Minimum beschränkt ist.

Figur 11 zeigt ausschnittsweise eine Abwandlung des zuvor beschriebenen Ausführungsbeispiels des Differenzdruckmessgerätes. Das abgewandelte Differenzdruckmessgerät weist zusätzlich zum zuvor beschriebenen Ausführungsbeispiel einen Permanentmagneten 114 und einen Drehwinkel-Halleffektsensor 116 auf. Der Permanentmagnet 114 ist an der Zeigerwelle 56 an deren vom Zeiger abgewandten Ende befestigt und dreht sich zusammen mit der Zeigerwelle 56. Der Drehwinkel-Halleffektsensor 116 ist an einer zu den Platinen 52 und 54 des Zeigerwerks 50 parallel angeordneten Platine befestigt und befindet sich im Magnetfeld des Permanentmagneten 116. Der Drehwinkel-Halleffektsensor 116 ist Element einer nicht dargestellten Schaltungsanordnung, die ein der Drehstellung der Zeigerwelle 56 und somit der Zeigerstellung entsprechendes elektrisches Ausgangssignal liefert und einen Ferngeber für den gemessenen Differenzdruck bildet. Wenn der Differenzdruck-Messbereich des Differenzdruckmessgerätes in vorstehend beschriebener Weise geändert wird, ist es nicht notwendig, den Ferngeber nachzujustieren, da die Zeigerwelle 56 sich auch nach einer Änderung des Differenzdruck-Messbereichs um die gesamte verfügbare Spanne von beispielsweise 270° dreht, so dass das Ausgangssignal der Schaltungsanordnung, das diese bei der Endstellung des Zeigers am oberen Ende des Messbereichs liefert, stets den gleichen Betrag hat. Gleiches gilt für Zwischenstellungen des Zeigers zwischen der Nullpunktstellung und der Endstellung.

Das Differenzdruckmessgerät weist eine Messeinheit, eine Anzeigeeinheit und einen Übertragungsmechanismus 18 auf, der einen Hub eines dem Differenzdruck ausgesetzten Trennelementes der Messeinheit zu einem Zeigerwerk 50 der Anzeigeeinheit überträgt. Das Zeigerwerk 50 umfasst ein schwenkbares Eingangselement 64, das eine gerade, erste Kontaktlinie 82 aufweist, und der Übertragungsmechanismus 18 weist ein dem Hub des Trennelementes entsprechend geschwenktes Ausgangselement 78 auf, an dem sich eine gerade, zweite Kontaktlinie befindet, die an der ersten Kontaktlinie 82 an einer Kontaktstelle anliegt. Mittels einer Stellvorrichtung 99 ist das Ausgangselement 78 relativ zu einem das Ausgangselement tragenden Träger 68 durch eine Stellbewegung in einer Stellebene derart bewegbar, dass der Abstand der Kontaktstelle zwischen dem Ausgangselement 78 und dem Eingangselement 64 von der Schwenkachse X des Eingangselementes 64 veränderbar ist. Das Eingangselement 64 und das Ausgangselement 78 sind relativ zueinander derart angeordnet, dass bei einer Nullstellung des Trennelementes, die dieses bei dem Differenzdruck Null einnimmt, die erste Kontaktlinie 82 parallel zu der Stellebene des Ausgangselementes 78 verläuft. Dies ermöglicht eine Änderung des Übersetzungsverhältnisses zwischen dem Hub des Trennelementes und dem Ausschlag eines Zeigers 46 der Anzeigeeinheit und somit eine Änderung des Differenzdruck-Messbereichs, ohne dass durch eine solche Änderung des Übersetzungsverhältnisses die Nullpunktstellung des Zeigers 46 verändert wird.

## Patentansprüche

1. Differenzdruckmessgerät, mit
einer Messeinheit (14), einer Anzeigeeinheit (16) und einem Übertragungsmechanismus (18),
wobei die Messeinheit (14) aufweist
ein Gehäuse (20, 22), in dem eine Kammer ausgebildet ist,
ein in der Kammer angeordnetes Trennelement (24), das die Kammer in einen ersten Druckraum (26) und einen zweiten Druckraum (28) unterteilt und die beiden Druckräume fluiddicht voneinander trennt,
wobei das Trennelement (24) in der Kammer derart angeordnet ist, dass zumindest ein mittlerer Abschnitt des Trennelementes (24) innerhalb der Kammer eine Hubbewegung in Richtung von dem ersten Druckraum (26) zu dem zweiten Druckraum (28) und umgekehrt ausführen kann,
einen im Gehäuse (20, 22) ausgebildeten und in den ersten Druckraum (26) mündenden ersten Messstoffanschluss zur Einleitung von Messstoff in den ersten Druckraum (26),
einen im Gehäuse (20, 22) ausgebildeten und in den zweiten Druckraum (28) mündenden zweiten Messstoffanschluss zur Einleitung von Messstoff in den zweiten Druckraum (28), und
zumindest eine im ersten Druckraum (21) angeordnete erste Feder (38), die auf dem Trennelement (24) aufsitzt, und zumindest eine im zweiten Druckraum (28) angeordnete zweite Feder (40), die auf dem Trennelement (24) aufsitzt,
wobei die erste Feder (38) und die zweite Feder (40) Federkräfte in zueinander entgegengesetzten Richtungen auf das Trennelement (24) ausüben und wobei der mittlere Abschnitt des Trennelementes (24) bei gleichen Messstoffdrücken in dem ersten Druckraum (24) und dem zweiten Druckraum (28) innerhalb der Kammer eine Nullstellung einnimmt,
wobei die Anzeigeeinheit (16) aufweist
ein Anzeigegehäuse (42),
einen Zeiger (46), und
eine Zeigerwerk (50) mit einer den Zeiger (46) tragenden Zeigerwelle (56) und mit einem um eine Schwenkachse (X) schwenkbaren Eingangselement (64), das eine gerade, erste Kontaktlinie (82) aufweist, die sich im Wesentlichen senkrecht zu der Schwenkachse (X) erstreckt,
wobei das Zeigerwerk (50) eine Schwenkbewegung des Eingangselements (64) in eine Drehbewegung der Zeigerwelle (56) umwandelt,
wobei der Übertragungsmechanismus (18) aufweist
einen Träger (68), der am Gehäuse (20, 22) der Messeinheit (14) um eine Lagerachse (Y) schwenkbar gelagert ist und derart in Wirkverbindung mit dem mittleren Abschnitt des Trennelementes (24) steht, dass der Träger (68) in Abhängigkeit von der Hubbewegung des mittleren Abschnitts des Trennelementes (24) eine Schwenkbewegung ausführt,
ein von dem Träger (68) getragenes Ausgangselement (78), das an der Schwenkbewegung des Trägers (68) teilnimmt und das eine gerade, zweite Kontaktlinie (84) aufweist, die an der ersten Kontaktlinie (82) an einer Kontaktstelle anliegt, und
eine Stellvorrichtung (99), mittels der das Ausgangselement (78) relativ zu dem Träger (68) durch eine Stellbewegung derart bewegbar ist, dass der Abstand der Kontaktstelle von der Schwenkachse (X) des Eingangselementes (64) veränderbar ist,
**dadurch gekennzeichnet,**
**dass** das Eingangselement (64) der Anzeigeeinheit (16) und das Ausgangselement (78) des Übertragungsmechanismus (18) relativ zueinander derart angeordnet sind, dass bei der Nullstellung des mittleren Abschnitts des Trennelementes (24) die erste Kontaktlinie (82) parallel zu derjenigen Ebene verläuft, in der sich die zweite Kontaktlinie (84) bei der Stellbewegung des Ausgangselements (78) relativ zu dem Träger (68) bewegt.

2. Differenzdruckmessgerät nach Anspruch 1, **dadurch gekennzeichnet, dass** das Trennelement als scheibenförmige Membran (24) ausgebildet ist, deren Randabschnitt in dem Gehäuse (20, 22) fluiddicht eingespannt ist.

3. Differenzdruckmessgerät nach Anspruch 2, **dadurch gekennzeichnet, dass** der mittlere Abschnitt der Membran (24) durch zwei aneinander anliegende, steife Platten (30, 32) gebildet ist, die zwischen sich eine ring- oder scheibenförmige Membranfolie (34) einschließen, die den Randabschnitt der Membran (24) bildet.

4. Differenzdruckmessgerät nach Anspruch 1, **dadurch gekennzeichnet, dass** das Trennelement als Kolben ausgebildet ist, der in der Kammer verschiebbar angeordnet ist.

5. Differenzdruckmessgerät nach einem der Ansprüche 1 bis 4, **dadurch gekennzeichnet, dass** das Zeigerwerk (50) ein Zahnsegment (60), eine fest mit dem Zahnsegment (60) verbundene und drehbar im Zeigerwerk (50) gelagerte Segmentwelle (62), ein fest mit der Zeigerwelle (56) verbundenes Zahnritzel (58), das mit dem Zahnsegment (60) kämmt, und eine an der Zeigerwelle (56) angreifende Spiralfeder (66) aufweist, die die Zeigerwelle (56) in Richtung einer Endstellung des Zeigers (46) vorspannt.

6. Differenzdruckmessgerät nach Anspruch 5, **dadurch gekennzeichnet, dass** das Eingangselement des Zeigerwerks (50) durch einen Arm des Zahnsegments (60) gebildet ist und die Achse der Segmentwelle (62) die Schwenkachse (X) des Eingangselementes bildet.

7. Differenzdruckmessgerät nach Anspruch 5, **dadurch gekennzeichnet, dass** das Eingangselement des Zeigerwerks (50) als Stift (64) ausgebildet ist, der an der Segmentwelle (62) befestigt ist, so dass die Achse der Segmentwelle (62) die Schwenkachse (X) des Eingangselementes bildet.

8. Differenzdruckmessgerät nach Anspruch 7, **dadurch gekennzeichnet, dass** zumindest der die erste Kontaktlinie (82) des Eingangselementes aufweisende Abschnitt des Stiftes (64) ein kreiszylindrisch geformter Abschnitt ist.

9. Differenzdruckmessgerät nach einem der Ansprüche 1 bis 8, **dadurch gekennzeichnet, dass** der Träger des Übertragungsmechanismus (18) als zweiarmiger Hebel (68) ausgebildet ist, der abgedichtet durch eine Öffnung (70) des Gehäuses (20, 22) verläuft, dass ein erster Arm (72) des Hebels (68) in einen der beiden Druckräume (26, 28) ragt und mit seinem freien Endabschnitt (74) mittelbar oder unmittelbar in Wirkverbindung mit dem mittleren Abschnitt des Trennelementes (24) steht, und dass der zweite Arm (76) des Hebels (68) in das Anzeigegehäuse (42) hineinragt und die Stellvorrichtung (99) sowie das Ausgangselement (78) trägt.

10. Differenzdruckmessgerät nach Anspruch 9, **dadurch gekennzeichnet, dass** der erste Arm (72) in denjenigen der beiden Druckräume (26) ragt, die für denjenigen Messstoff vorgesehen ist, der einen höheren Druck hat als der Messstoff, für den der andere der beiden Druckräume (28) vorgesehen ist.

11. Differenzdruckmessgerät nach Anspruch 9 oder 10, **dadurch gekennzeichnet, dass** in oder an der Öffnung (70) des Gehäuses (20, 22) eine elastische Dichtmanschette (110) angeordnet ist, die einerseits an dem Hebel (68) und andererseits an dem Gehäuse (20, 22) befestigt ist und den Durchtritt von Messstoff durch die Öffnung (70) verhindert.

12. Differenzdruckmessgerät nach Anspruch 11, **gekennzeichnet durch** eine Stützplatte (112), die die Dichtmanschette (110) auf ihrer dem zweiten Arm (76) des Hebels (68) zugewandten Seite abstützt.

13. Differenzdruckmessgerät nach Anspruch 11 oder 12, **dadurch gekennzeichnet, dass** der Hebel (68) zumindest im Bereich der Dichtmanschette (110) kreiszylindrisch geformt ist.

14. Differenzdruckmessgerät nach einem der Ansprüche 9 bis 13, **dadurch gekennzeichnet, dass** der erste Arm (72) des Hebels (68) als im Wesentlichen kreiszylindrischer Stab ausgebildet ist.

15. Differenzdruckmessgerät nach einem der Ansprüche 11 bis 14, **dadurch gekennzeichnet, dass** der zweite Arm (76) des Hebels (68) zwei zueinander parallele Schenkel (102) aufweist, die zwischen sich eine Ausnehmung begrenzen, in der ein Stababschnitt (108) des Hebels angeordnet ist, der in den ersten Arm (72) des Hebels (68) übergeht und an dem die Dichtmanschette (110) befestigt ist, und dass zur schwenkbaren Lagerung des Hebels (68) entweder an dem Gehäuse (20, 22) oder jeweils an einem der zwei Schenkel (102) zwei koaxiale Lagerstifte (104) befestigt sind, die beiderseits des Stababschnitts (108) angeordnet sind und deren gemeinsame Achse die Lagerachse (Y) des Hebels (68) bildet, wobei die Lagerachse (Y) im Wesentlichen durch denjenigen Bereich des Stababschnitts (108) verläuft, an dem die Dichtmanschette (110) befestigt ist.

16. Differenzdruckmessgerät nach Anspruch 15, **gekennzeichnet durch** eine am Gehäuse (20, 22) befestigte Lagerplatte (106) zur Aufnahme der zwei Lagerstifte (104).

17. Differenzdruckmessgerät nach Anspruch 16, **dadurch gekennzeichnet, dass** die Dichtmanschette (110) und gegebenenfalls die Stützplatte (112) mittels der Lagerplatte (106) am Gehäuse (20, 22) befestigt ist bzw. sind.

18. Differenzdruckmessgerät nach einem der Ansprüche 9 bis 17, **dadurch gekennzeichnet, dass** das Ausgangselement des Übertragungsmechanismus (108) als Stift (78) ausgebildet ist.

19. Differenzdruckmessgerät nach Anspruch 18, **dadurch gekennzeichnet, dass** zumindest der die zweite Kontaktlinie (84) des Ausgangselementes aufweisende Abschnitt des Stiftes (78) ein kreiszylindrisch geformter Abschnitt ist.

20. Differenzdruckmessgerät nach Anspruch 18 oder 19, **dadurch gekennzeichnet, dass** die Stellvorrichtung (99) eine Stellwelle (86) aufweist, die drehbar am zweiten Arm (76) des Hebels (68) gelagert ist und an der der Stift (78) befestigt ist, so dass die Stellbewegung des Stiftes (78) relativ zum Hebel (68) eine Drehbewegung um die Achse (Z) der Stellwelle (86) ist, wobei der Stift (78) relativ zu der Stellwelle (86) derart angeordnet ist, dass die zweite Kontaktlinie (84) senkrecht zur Achse (Z) der Stellwelle (86) verläuft.

21. Differenzdruckmessgerät nach Anspruch 20, **dadurch gekennzeichnet, dass** die Achse (Z) der Stellwelle (86) senkrecht oder im Wesentlichen senkrecht zur Lagerachse (Y) des Hebels (68) verläuft.

22. Differenzdruckmessgerät nach Anspruch 20 oder 21, **dadurch gekennzeichnet, dass** die Stellwelle (86) in Richtung ihrer Achse (Z) verschiebbar am zweiten Arm (76) des Hebels (68) angeordnet ist und in ihrer jeweiligen durch Verschieben erreichten Stellung fixierbar ist.

23. Differenzdruckmessgerät nach Anspruch 22, **gekennzeichnet durch** eine Lagerhülse (88), in der die Stellwelle (86) drehbar und axial nicht verschiebbar gelagert ist, wobei die Lagerhülse (88) verschiebbar in einer Bohrung (90) im zweiten Arm (76) des Hebels (68) sitzt und in ihrer jeweiligen **durch** Verschieben erreichten Stellung fixierbar ist, so dass die Stellwelle (86) **durch** Verschieben und Fixieren der Lagerhülse (88) verschoben und fixiert wird.

24. Differenzdruckmessgerät nach Anspruch 23, **gekennzeichnet durch** eine in den zweiten Arm (76) eingesetzte Schraube (92) zum Fixieren der Lagerhülse (88) in der Bohrung (90), wobei die Schraube (92) die Lagerhülse (88) in der Bohrung (90) festklemmt.

25. Differenzdruckmessgerät nach einem der Ansprüche 20 bis 24, **gekennzeichnet durch** eine auf die Stellwelle (86) einwirkende Einrichtung (94) zur Erzeugung einer der Drehbewegung der Stellwelle (86) entgegenwirkenden Haftreibung.

26. Differenzdruckmessgerät nach einem der Ansprüche 20 bis 25, **dadurch gekennzeichnet, dass** die Stellwelle (86) mit einem Kopf (96) versehen ist, der zum Ansetzen eines Drehwerkzeugs dient.

27. Differenzdruckmessgerät nach Anspruch 26, **dadurch gekennzeichnet, dass** der Kopf durch einen an der Stellwelle (86) befestigten Trichter (96) gebildet ist, an dessen engem Ende ein Innenmehrkant (98) ausgebildet ist.

28. Differenzdruckmessgerät nach Anspruch 26 oder 27, **dadurch gekennzeichnet, dass** das Anzeigegehäuse (42) eine verschließbare Öffnung aufweist, die relativ zum Kopf (96) der Stellwelle (86) derart angeordnet ist, dass durch die Öffnung hindurch das Drehwerkzeug eingeführt und an den Kopf (96) angesetzt werden kann.

29. Differenzdruckmessgerät nach einem der Ansprüche 1 bis 28, **dadurch gekennzeichnet, dass** an dem von dem Zeiger (46) abgewandten Ende der Zeigerwelle (56) ein sich mit der Zeigerwelle (56) drehender Permanentmagnet (114) befestigt ist, in dessen Magnetfeld ein feststehender Drehwinkel-Halleffektsensor (116) angeordnet ist, der ein der Drehbewegung der Zeigerwelle (56) entsprechendes elektrisches Ausgangssignal liefert.

## Claims

1. Differential pressure gauge, having
a measurement unit (14), an indication unit (16) and a transfer mechanism (18),
wherein the measurement unit (14) has
a housing (20, 22), in which a chamber is formed,
a partition element (24) arranged in the chamber, which partition element (24) divides the chamber into a first pressure space (26) and a second pressure space (28) and the two pressure spaces are separated from each other in a fluid-tight manner,
wherein the partition element (24) is arranged in the chamber such that at least one central section of the partition element (24) can execute a lift movement in the direction from the first pressure space (26) to the second pressure space (28) and vice versa,
a first measurement substance connection, which is formed in the housing (20, 22) and opens into the first pressure space (26), for introducing measurement substance into the first pressure space (26),
a second measurement substance connection, which is formed in the housing (20, 22) and opens into the second pressure space (28), for introducing measurement substance into the second pressure space (28),
at least one first spring (38), which is arranged in the first pressure space (21) and is seated on the partition element (24), and at least one second spring (40), which is arranged in the second pressure space (28) and is seated on the partition element (24),
wherein the first spring (38) and the second spring (40) exert spring forces onto the partition element (24) in mutually opposite directions and wherein the central section of the partition element (24) assumes a zero position in the chamber if the measurement substance pressures in the first pressure space (24) and the second pressure space (28) are the same,
wherein the indication unit (16) has
an indication housing (42),
a pointer (46), and
a pointer system (50) having a pointer shaft (56) carrying the pointer (46) and having an input element (64), which is pivotable about a pivot axis (X) and has a straight, first contact line (82), which extends substantially at right angles to the pivot axis (X),
wherein the pointer system (50) converts a pivot movement of the input element (64) into a rotational movement of the pointer shaft (56),
wherein the transfer mechanism (18) has
a carrier (68), which is mounted at the housing (20, 22) of the measurement unit (14) such that it is pivotable about a bearing axis (Y) and is operatively connected to the central section of the partition element (24) such that the carrier (68) executes a pivot movement in dependence on the lift movement of the central section of the partition element (24),
an output element (78), which is carried by the carrier (68), participates in the pivot movement of the carrier (68) and has a straight, second contact line (84), which bears against the first contact point on the first contact line (82), and
an actuation apparatus (99), by means of which the output element (78) is moveable relative to the carrier (68) by way of an actuation movement such that the distance between the contact point and the pivot axis (X) of the input element (64) is variable,
**characterized in that**
the input element (64) of the indication unit (16) and the output element (78) of the transfer mechanism (18) are arranged relative to each other such that in the zero position of the central section of the partition element (24) the first contact line (82) runs parallel to that plane in which the second contact line (84) moves relative to the carrier (68) in the case of the actuation movement of the output element (78).

2. Differential pressure gauge according to Claim 1, **characterized in that** the partition element is configured as a plate-type membrane (24), the peripheral section of which is clamped in the housing (20, 22) in a fluid-tight manner.

3. Differential pressure gauge according to Claim 2, **characterized in that** the central section of the membrane (24) is formed by two stiff plates (30, 32) which rest against each other and enclose between them an annular or plate-type membrane film (34) which forms the peripheral section of the membrane (24).

4. Differential pressure gauge according to Claim 1, **characterized in that** the partition element is configured as a piston which is arranged displaceably in the chamber.

5. Differential pressure gauge according to one of Claims 1 to 4, **characterized in that** the pointer system (50) has a tooth segment (60), a segment shaft (62), which is fixedly connected to the tooth segment (60) and is rotatably mounted in the pointer system (50), a pinion (58), which is fixedly connected to the pointer shaft (56) and meshes with the tooth segment (60), and a balance spring (66) which acts on the pointer shaft (56) and preloads the pointer shaft (56) in the direction of an end position of the pointer (46).

6. Differential pressure gauge according to Claim 5, **characterized in that** the input element of the pointer system (50) is formed by an arm of the tooth segment (60) and the axis of the segment shaft (62) forms the pivot axis (X) of the input element.

7. Differential pressure gauge according to Claim 5, **characterized in that** the input element of the pointer system (50) is configured as a pin (64) which is attached to the segment shaft (62) such that the axis of the segment shaft (62) forms the pivot axis (X) of the input element.

8. Differential pressure gauge according to Claim 7, **characterized in that** at least that section of the pin (64) that has the first contact line (82) of the input element is a circular-cylindrically shaped section.

9. Differential pressure gauge according to one of Claims 1 to 8, **characterized in that** the carrier of the transfer mechanism (18) is configured as a two-armed lever (68), which runs in a sealed manner through an opening (70) in the housing (20, 22), **in that** a first arm (72) of the lever (68) projects into one of the two pressure spaces (26, 28) and with its free end section (74) is indirectly or directly operatively connected to the central section of the partition element (24), and **in that** the second arm (76) of the lever (68) projects into the indication housing (42) and carries the actuation apparatus (99) and the output element (78).

10. Differential pressure gauge according to Claim 9, **characterized in that** the first arm (72) projects into that one of the two pressure spaces (26) that is provided for that measurement substance that has a higher pressure than the measurement substance that is provided for the other one of the two pressure spaces (28).

11. Differential pressure gauge according to Claim 9 or 10, **characterized in that** an elastic sealing collar (110) is arranged in or on the opening (70) of the housing (20, 22), which sealing collar (110) is attached to the lever (68) on the one side and to the housing (20, 22) on the other side and prevents the measurement substance from passing through the opening (70).

12. Differential pressure gauge according to Claim 11, **characterized by** a support plate (112), which supports the sealing collar (110) on the side thereof that faces the second arm (76) of the lever (68).

13. Differential pressure gauge according to Claim 11 or 12, **characterized in that** the lever (68) is in the form of a circular cylinder at least in the region of the sealing collar (110).

14. Differential pressure gauge according to one of Claims 9 to 13, **characterized in that** the first arm (72) of the lever (68) is configured as a substantially circular-cylindrical rod.

15. Differential pressure gauge according to one of Claims 11 to 14, **characterized in that** the second arm (76) of the lever (68) has two mutually parallel limbs (102) which delimit between them a cutout in which a rod section (108) of the lever is arranged, which rod section (108) merges into the first arm (72) of the lever (68) and has attached to it the sealing collar (110), and **in that**, for pivotable mounting of the lever (68), two coaxial bearing pins (104) either on the housing (20, 22) or in each case on one of the two limbs (102), which bearing pins (104) are arranged on both sides of the rod section (108) and the common axis of which forms the bearing axis (Y) of the lever (68), wherein the bearing axis (Y) extends substantially through that region of the rod section (108) to which the sealing collar (110) is attached.

16. Differential pressure gauge according to Claim 15, **characterized by** a bearing plate (106), which is attached to the housing (20, 22), for holding the two bearing pins (104).

17. Differential pressure gauge according to Claim 16, **characterized in that** the sealing collar (110) and if appropriate the support plate (112) is/are attached to the housing (20, 22) by way of the bearing plate (106).

18. Differential pressure gauge according to one of Claims 9 to 17, **characterized in that** the output element of the transfer mechanism (108) is configured as a pin (78).

19. Differential pressure gauge according to Claim 18, **characterized in that** at least that section of the pin (78) that has the second contact line (84) of the output element is a circular-cylindrically formed section.

20. Differential pressure gauge according to Claim 18 or 19, **characterized in that** the actuation apparatus (99) has an actuation shaft (86), which is rotatably mounted on the second arm (76) of the lever (68) and has attached to it the pin (78), with the result that the actuation movement of the pin (78) relative to the lever (68) is a rotational movement about the axis (Z) of the actuation shaft (86), wherein the pin (78) is arranged relative to the actuation shaft (86) such that the second contact line (84) runs at right angles to the axis (Z) of the actuation shaft (86).

21. Differential pressure gauge according to Claim 20, **characterized in that** the axis (Z) of the actuation shaft (86) runs at right angles or substantially at right angles to the bearing axis (Y) of the lever (68).

22. Differential pressure gauge according to Claim 20 or 21, **characterized in that** the actuation shaft (86) is arranged on the second arm (76) of the lever (68) such that it is displaceable in the direction of its axis (Z) and is fixable in its respective position that has been achieved by way of displacement.

23. Differential pressure gauge according to Claim 22, **characterized by** a bearing sleeve (88), in which the actuation shaft (86) is mounted such that it is rotatable and axially not displaceable, wherein the bearing sleeve (88) sits displaceably in a hole (90) in the second arm (76) of the lever (68) and is fixable in its respective position that has been achieved by way of displacement, with the result that the actuation shaft (86) is displaced and fixed by way of displacing and fixing the bearing sleeve (88).

24. Differential pressure gauge according to Claim 23, **characterized by** a screw (92), which is inserted in the second arm (76), for fixing the bearing sleeve (88) in the hole (90), wherein the screw (92) clamps the bearing sleeve (88) in position in the hole (90).

25. Differential pressure gauge according to one of Claims 20 to 24, **characterized by** a device (94), which acts on the actuation shaft (86), for generating static friction that acts counter to the rotational movement of the actuation shaft (86).

26. Differential pressure gauge according to one of Claims 20 to 25, **characterized in that** the actuation shaft (86) is provided with a head (96), which serves as a point of application for a turning tool.

27. Differential pressure gauge according to Claim 26, **characterized in that** the head is formed by a funnel (96) attached to the actuation shaft (86), with a polygon socket (98) being configured at the narrow end of said funnel (96).

28. Differential pressure gauge according to Claim 26 or 27, **characterized in that** the indication housing (42) has a closable opening which is arranged relative to the head (96) of the actuation shaft (86) such that the turning tool can be inserted through the opening and can be applied on the head (96).

29. Differential pressure gauge according to one of Claims 1 to 28, **characterized in that** attached to that end of the pointer shaft (56) that faces away from the pointer (46) is a permanent magnet (114), which rotates together with the pointer shaft (56) and in whose magnetic field a positionally fixed Hall effect rotary position sensor (116) is arranged, which provides an electric output signal that corresponds to the rotary movement of the pointer shaft (56).

## Revendications

1. Appareil de mesure d'une pression différentielle, avec :
une unité de mesure (14), une unité d'affichage (16) et un mécanisme de transmission (18),
l'unité de mesure (14) présentant :
un boîtier (20, 22) dans lequel est réalisée une chambre,
un élément de séparation (24), disposé dans la chambre, subdivisant la chambre en une première enceinte à pression (26) et une deuxième enceinte à pression (28) et séparant l'une de l'autre, de manière étanche aux fluides, les deux enceintes à pression,
l'élément de séparation (24) étant disposé dans la chambre, de manière qu'au moins un tronçon médian de l'élément de séparation (24) puisse effectuer à l'intérieur de la chambre un mouvement de course en translation en direction de la première enceinte à pression (26) vers la deuxième enceinte à pression (28) et inversement,
un premier raccordement à une substance de mesure, réalisé dans le boîtier (20, 22) et débouchant dans la première enceinte à pression (26), pour l'introduction de substance de mesure dans la première enceinte à pression (26),
un deuxième raccordement à une substance de mesure, réalisé dans le boîtier (20, 22) et débouchant dans la deuxième enceinte à pression (28), pour l'introduction de substance de mesure dans la deuxième enceinte à pression (28), et
au moins un premier ressort (38), disposé dans la première enceinte à pression (21), reposant sur l'élément de séparation (24), et au moins un deuxième ressort (40), disposé dans la deuxième enceinte à pression (28), reposant sur l'élément de séparation (24),
le premier ressort (38) et le deuxième ressort (40) exerçant des efforts élastiques, dans des sens mutuellement opposés, sur l'élément de séparation (24), et le tronçon médian de l'élément de séparation (24) prenant une position zéro, pour des pressions de la substance de mesure identiques dans la première enceinte à pression (24) et la deuxième enceinte à pression (28) à l'intérieur de la chambre,
l'unité d'affichage (16) présentant :
un boîtier d'affichage (42),
une aiguille (46), et
un rouage à aiguilles (50), avec un arbre à aiguille (56) portant l'aiguille (46), et avec un élément d'entrée (64), susceptible de pivoter autour d'un axe de pivotement (X), présentant une première ligne de contact (82), rectiligne, s'étendant sensiblement perpendiculairement à l'axe de pivotement (X),
le rouage à aiguilles (50) convertissant un mouvement de pivotement de l'élément d'entrée (64) en un mouvement de rotation de l'arbre à aiguille (56),
le mécanisme de transmission (18) présentant :
un support (68), monté à pivotement autour d'un axe de palier (Y), sur le boîtier (20, 22) de l'unité de mesure (14), et placé en liaison fonctionnelle avec le tronçon médian de l'élément de séparation (24), de manière que le support (68) effectue un mouvement de pivotement, en fonction du mouvement de course en translation du tronçon médian de l'élément de séparation (24),
un élément de sortie (78), porté par le support (68), participant au mouvement de pivotement du support (68) et présentant une deuxième ligne de contact (84), rectiligne, prenant appui sur la première ligne de contact (82) en un partiellement de contact, et
un dispositif de réglage (99), au moyen duquel l'élément de sortie (78) est déplaçable par rapport au support (68), par un déplacement de réglage, de manière que l'espacement de l'emplacement de contact vis-à-vis de l'axe de pivotement (X) de l'élément d'entrée (64) soit modifiable,
**caractérisé en ce que**
l'élément d'entrée (64) de l'unité d'affichage (16) et l'élément de sortie (78) du mécanisme de transmission (18) sont disposés l'un par rapport à l'autre de manière que, à la position zéro du tronçon médian de l'élément de séparation (24), la première ligne de contact (82) s'étende parallèlement au plan dans lequel la deuxième ligne de contact (84) se déplace, lors du déplacement de réglage de l'élément de sortie (78) par rapport au support (68).

2. Appareil de mesure d'une pression différentielle selon la revendication 1, **caractérisé en ce que** l'élément de séparation est réalisé sous forme de membrane (24) en forme de disque, dont le tronçon de bordure est enserré, de manière étanche aux fluides, dans le boîtier (20, 22).

3. Appareil de mesure d'une pression différentielle selon la revendication 2, **caractérisé en ce que** le tronçon médian de la membrane (24) est formé par deux plaques (30, 32) rigides, appuyant l'une sur l'autre, enfermant entre elles une feuille de membrane (34) en forme d'anneau ou en forme de disque, formant le tronçon de bordure de la membrane (24).

4. Appareil de mesure d'une pression différentielle selon la revendication 1, **caractérisé en ce que** l'élément de séparation est réalisé sous forme de piston, disposé de manière à être déplaçable dans la chambre.

5. Appareil de mesure d'une pression différentielle selon l'une des revendications 1 à 4, **caractérisé en ce que** le rouage à aiguilles (50) présente une premier segment denté (60), un arbre à segment (62), relié au segment denté (60) et monté à rotation dans le rouage à aiguilles (50), un pignon denté (58), relié rigidement à l'arbre à aiguille (56), s'engrenant avec le segment denté (60), et un ressort spiral (66), agissant sur l'arbre à aiguille (56), précontraignant l'arbre à aiguille (56) en direction d'une position finale de l'aiguille (46).

6. Appareil de mesure d'une pression différentielle selon la revendication 5, **caractérisé en ce que** l'élément d'entrée du rouage à aiguilles (50) est formé par un bras du segment denté (60) et l'axe de l'arbre à segment (62) forme l'axe de pivotement (X) de l'élément d'entrée.

7. Appareil de mesure d'une pression différentielle selon la revendication 5, **caractérisé en ce que** l'élément d'entrée du rouage à aiguilles (50) est réalisé sous forme de tige (64), fixée sur l'arbre à segment (62), de manière que l'axe de l'arbre à segment (62) forme l'axe de pivotement (X) de l'élément d'entrée.

8. Appareil de mesure d'une pression différentielle selon la revendication 7, **caractérisé en ce qu'**au moins le tronçon, présentant la première ligne de contact (82) de l'élément d'entrée, de la tige (64) est un tronçon en forme de cylindre à section circulaire.

9. Appareil de mesure d'une pression différentielle selon l'une des revendications 1 à 8, **caractérisé en ce que** le support du mécanisme de transmission (18) est réalisé sous forme de levier (68) à deux bras, s'étendant, en étant isolé de manière étanche, à travers une ouverture (70) du boîtier (20, 22), **en ce qu'**un premier bras (72) du levier (68) pénètre dans l'une des deux enceintes à pression (26, 28) et est placé, par son tronçon d'extrémité (74) libre, indirectement ou directement en liaison fonctionnelle avec le tronçon médian de l'élément de séparation (24), et **en ce que** le deuxième bras (76) du levier (68) pénètre dans le boîtier d'affichage (42) et porte le dispositif de réglage (99) ainsi que l'élément de sortie (78).

10. Appareil de mesure d'une pression différentielle selon la revendication 9, **caractérisé en ce que** le premier bras (72) pénètre dans celle (26) des deux enceintes à pression qui est prévue pour la substance de mesure ayant une pression plus élevée que la substance de mesure pour laquelle est prévue l'autre (28) des deux enceintes à pression.

11. Appareil de mesure d'une pression différentielle selon la revendication 9 ou 10, **caractérisé en ce que**, dans ou sur l'ouverture (70) du boîtier (20, 22) est disposée une manchette d'étanchéité (110) élastique, fixée, d'une part, sur le levier (68) et, d'autre part, sur le boîtier (20, 22), et empêchant le passage de substance de mesure à travers l'ouverture (70).

12. Appareil de mesure d'une pression différentielle selon la revendication 11, **caractérisé par** une plaque de soutien (112), soutenant la manchette d'étanchéité (110) sur sa face tournée vers le deuxième bras (76) du levier (68).

13. Appareil de mesure d'une pression différentielle selon la revendication 11 ou 12, **caractérisé en ce que**, au moins dans la zone de la manchette d'étanchéité (110), le levier (68) est en forme de cylindre à section circulaire.

14. Appareil de mesure d'une pression différentielle selon l'une des revendications 9 à 13, **caractérisé en ce que** le premier bras (72) du levier (68) est réalisé sous la forme de barre sensiblement cylindrique à section circulaire.

15. Appareil de mesure d'une pression différentielle selon l'une des revendications 11 à 14, **caractérisé en ce que** le deuxième bras (76) du levier (68) présente deux branches (102) parallèle entre elles, délimitant entre elles un évidement, dans lequel est disposé un tronçon de barre (108) du levier, se transformant en le premier bras (72) du levier (68) et fixé sur la manchette d'étanchéité (110), et **en ce que**, pour assurer le montage à pivotement du levier (68), soit sur le boîtier (20, 22), soit chaque fois sur l'une des deux branches (102), sont fixées deux tiges de palier (104) coaxiales, disposées des deux côtés du tronçon de barre (108) et dont l'axe commun forme l'axe de palier (Y) du levier (68), l'axe de palier (Y) s'étendant sensiblement à travers la zone du tronçon de barre (108) sur laquelle la manchette d'étanchéité (110) est fixée.

16. Appareil de mesure d'une pression différentielle selon la revendication 15, **caractérisé par** une plaque de palier (106), fixée sur le boîtier (20, 22), pour supporter les deux tiges de palier (104).

17. Appareil de mesure d'une pression différentielle selon la revendication 16, **caractérisé en ce que** la manchette d'étanchéité (110) et, le cas échéant, la plaque de soutien (112) est, ou sont, fixée(s) sur le boîtier (20, 22) au moyen de la plaque de palier (106).

18. Appareil de mesure d'une pression différentielle selon l'une des revendications 9 à 17, **caractérisé en ce que** l'élément de sortie du mécanique de transmission (108) est réalisé sous forme de tige (78).

19. Appareil de mesure d'une pression différentielle selon la revendication 18 ou 19, **caractérisé en ce qu'**au moins le tronçon, présentant la deuxième ligne de contact (84) de l'élément de sortie, de la tige (78) est un tronçon en forme de cylindre à section circulaire.

20. Appareil de mesure d'une pression différentielle selon la revendication 18 ou 19, **caractérisé en ce que** le dispositif de réglage (99) présente un arbre de réglage (86), monté à rotation sur le deuxième bras (76) du levier (68) et auquel la tige (78) est fixée, de manière que le déplacement de réglage de la tige (78) par rapport au levier (68) soit un mouvement de rotation autour de l'axe de rotation (Z) de l'arbre de réglage (86), la tige (78) étant disposée par rapport à l'arbre de réglage (86), de manière que la deuxième ligne de contact (84) s'étende perpendiculairement par rapport à l'axe (Z) de l'arbre de réglage (86).

21. Appareil de mesure d'une pression différentielle selon la revendication 20, **caractérisé en ce que** l'axe (Z) de l'arbre de réglage (86) s'étend perpendiculairement ou sensiblement perpendiculairement à l'axe de palier (Y) du levier (68).

22. Appareil de mesure d'une pression différentielle selon la revendication 20 ou 21, **caractérisé en ce que** l'arbre de réglage (86) est disposé de manière déplaçable, en direction de son axe (Z), sur le deuxième bras (76) du levier (68) et est susceptible d'être fixé à sa position respective, atteinte par translation.

23. Appareil de mesure d'une pression différentielle selon la revendication 22, **caractérisé par** une douille de palier (88), dans laquelle l'arbre de réglage (86) est monté à rotation et non déplaçable axialement, la douille de palier (88) siégeant, de manière déplaçable, dans un perçage (90) ménagé dans le deuxième bras (76) du levier (68) et étant susceptible d'être fixé à sa position respective, atteinte par translation, de manière que l'arbre de réglage (86) soit déplacé et fixé par déplacement et fixation de la douille de palier (88).

24. Appareil de mesure d'une pression différentielle selon la revendication 23, **caractérisé par** une vis (92), insérée dans le deuxième bras (76), pour la fixation de la douille de palier (88) dans le perçage (90), la vis (92) fixant par serrage la douille de palier (88) dans le perçage (90).

25. Appareil de mesure d'une pression différentielle selon l'une des revendications 20 à 24, **caractérisé par** un dispositif (94), agissant sur l'arbre de réglage (86), pour produire une friction d'adhésion, agissant à l'encontre du mouvement de rotation de l'arbre de réglage (86).

26. Appareil de mesure d'une pression différentielle selon l'une des revendications 20 à 25, **caractérisé en ce que** l'arbre de réglage (86) est muni d'une tête (96), servant à l'application d'un outil de rotation.

27. Appareil de mesure d'une pression différentielle selon la revendication 26, **caractérisé en ce que** la tête est formée par une entonnoir (96), fixé à l'arbre de réglage (86), à l'extrémité étroite duquel est réalisé un multipans intérieur (98).

28. Appareil de mesure d'une pression différentielle selon la revendication 26 ou 27, **caractérisé en ce que** le boîtier d'affichage (42) présente une ouverture fermable, disposée, par rapport à la tête (96) de l'arbre de réglage (86), de manière que l'outil de rotation puisse être inséré à travers-l'ouverture et être appliqué sur la tête (96).

29. Appareil de mesure d'une pression différentielle selon l'une des revendications 1 à 28, **caractérisé en ce que**, à l'extrémité, opposée à l'aiguille (46), de l'arbre à aiguille (56), est fixé un aimant permanent (114), tournant avec l'arbre à aiguille (56), dans le champ magnétique duquel est disposé un capteur d'angle de rotation à effet Hall (116) stationnaire, fournissant un signal de sortie électrique correspondant au mouvement de rotation de l'arbre à aiguille (56).
